# EUROPEAN PATENT APPLICATION

(11) **EP 3 200 071 A1**
(43) Date of publication of application: **02.08.2017**
(21) Application number: 15844383.8
(22) Date of filing: 29.05.2015
(51) Int. Cl.: G06F 9/445

(54) **RUNTIME ENVIRONMENT CONFIGURATION METHOD, DEVICE AND SYSTEM**

(30) Priority: 24.09.2014 CN 201410495829
(71) Applicant: ZTE Corporation, Shenzhen, Guangdong 518057 (CN)
(72) Inventor: TANG, Hailong, Shenzhen Guangdong 518057 (CN)
(74) Representative: Mozzi, Matteo
(86) International application number: PCT/CN2015/080333
(87) International publication number: WO 2016/045403

(57) **Abstract**

A method, device and system for configuring runtime environment are provided, wherein the method includes: a server acquires configuration information about runtime environments of clients, wherein the configuration information is used for configuring the runtime environment (S102); and the server sends the configuration information to the clients (S104). The technical problem existing in the related art that configuration efficiency of a runtime environment is relatively low is solved, and by virtue of the implement of configuration of the runtime environment of the client by the server, the configuration efficiency of the runtime environment is improved.

## Description

### Technical Field

The present disclosure relates to the field of communications and, more particularly, to methods, devices and system for configuring runtime environment.

### Background

In software development and testing, the software cannot run without the runtime environment. In order to run the software, there are often multiple sets of runtime environment and the runtime environment needs to be configured and deployed in advance.

The current software product has more and more complex functions, and the quality requirements are getting higher and higher. Especially, with the spreading of the agile development, the runtime environment used in the development and testing increases, and the frequency of reconfiguring and redeploying the runtime environment increases, the time taken to configure and deploy the runtime environment also gradually increases. In order to quickly push the product into the market, it is necessary to shorten the development cycle and improve the efficiency and the success probability of deployment, so that the time will be spent on the value increasing activities, the wasted time is reduced, and more value is delivered to customers.

At present, the traditional deployment of the runtime environment is usually a manual configuration, which is performed after a one-by-one remote login or a direct Keyboard Video Mouse (referred to as KVM) login. The traditional deployment has the following drawbacks.

The larger the number of the runtime environment is, the longer the manual configuration time is taken. When the software versions are updated in the process of the multi-round test, all the runtime environments must be redeployed, so this traditional method is inefficient and occupies too many software development cycles, and the manual configuration deployment is very error prone.

### Summary

In the embodiments of the present application, methods, devices and systems for configuring the runtime environment are provided, intend to solve the technical problems existing in the related art that configuration efficiency of a runtime environment is relatively low t.

According to an embodiment of the present disclosure, provided a method for configuring runtime environment, and the method includes: a server acquires configuration information about runtime environments of clients, wherein the configuration information is used for configuring the runtime environment; and the server sends the configuration information to the clients.

In an embodiment of the present disclosure, the server acquires configuration information about runtime environments of clients, including one of: the server receiving a set of deployment instructions entered by a user, for each of the clients, the set of deployment instructions being used as the configuration information, wherein the set of deployment instructions and the client in an one-to-one relationship; and the server acquires the set of deployment instructions from a preset Extensible Markup Language (XML) file.

In an embodiment of the present disclosure, before the server sends the configuration information to the clients, the method includes one of: the server acquiring an IP address of the client from the preset XML file, wherein the IP address is used to indicate a sending object of the configuration information; and the server receiving the IP address entered by the user.

In an embodiment of the present disclosure, after the server sends the configuration information to the clients, the method further includes that: the server receives and displays the configuration progress and/or resource occupation information of the client.

In an embodiment of the present disclosure, before the server receives and displays the configuration progress and/or resource occupation information of the client, the method includes that: the server sends a request message to the client, wherein the request message is used to request the client to feed back the configuration progress and/or the resource occupation information.

In an embodiment of the present disclosure, the server sends the configuration information to the clients, including that: the server sends the configuration information to the clients through a Common Object Request Broker Architecture (CORBA) interface.

According to another embodiment of the present disclosure, another method for configuring runtime environment is provided, and the method includes: a client receives configuration information sent from a server; and the client configures the local runtime environment according to the configuration information.

In an embodiment of the present disclosure, the client receives the configuration information sent from the server, including that: the client receives the configuration information through a CORBA interface.

According to another embodiment of the present disclosure, a device for configuring runtime environment is provided, which is applied to a server, and the device includes: an acquiring module configured to acquire configuration information about runtime environments of clients, wherein the configuration information is used for configuring the runtime environment; and a sending module configured to send the configuration information to the clients.

In an embodiment of the present disclosure, the acquiring module includes one of: a receiving unit configured to receive a set of deployment instructions entered by a user, the set of deployment instructions being used as the configuration information, wherein the set of deployment instructions and the client in an one-to-one relationship; and an acquiring unit configured to acquire the set of deployment instructions from a preset XML file.

According to another embodiment of the present disclosure, another device for configuring runtime environment is provided, which is applied to a client, and the device includes: a receiving module configured to receive configuration information sent from a server; and a configuring module configured to configure the local runtime environment according to the configuration information.

According to another embodiment of the present disclosure, a system for configuring runtime environment is provided, and the system includes: a server configured to acquire configuration information about runtime environments of clients; and send the configuration information to the clients, wherein the configuration information is used for configuring the runtime environment; and a client configured to receive the configuration information sent from a server; and configure the local runtime environment according to the configuration information.
in the embodiments of the present disclosure, by virtue of the server sending the configuration information of the runtime environment to the client for configuring the client, the technical problem existing in the related art that configuration efficiency of a runtime environment is relatively low is solved , the server configuration of the runtime environment of the client by the server is implemented, thereby improving the configuration efficiency of the runtime environment.

### Brief description of the drawings

The drawings are described here to provide further understanding of the present disclosure and form a part of the present application. The schematic embodiments and description of the present disclosure are adopted to explain the present disclosure, and do not form improper limits to the present disclosure.
Fig. 1 is a flowchart of a method for configuring runtime environment according to an embodiment of the present disclosure.
Fig. 2 is flowchart of a method for configuring runtime environment according to an exemplary embodiment of the present disclosure.
Fig. 3 is a structure diagram of a device for configuring runtime environment according to an embodiment of the present disclosure.
Fig. 4 is a structure diagram of a device for configuring runtime environment according to an embodiment of the present disclosure.
Fig. 5 is a flowchart of another method for configuring runtime environment according to an embodiment of the present disclosure.
Fig. 6 is a structure diagram of another device for configuring runtime environment according to an embodiment of the present disclosure.
Fig. 7 is a schematic diagram of an instruction deployment flow of a method for configuring runtime environment according to an embodiment of the present disclosure.
Fig. 8 is a structure diagram of a system for configuring runtime environment according to an embodiment of the present disclosure.
Fig. 9 is a schematic diagram of a system for configuring runtime environment according to an exemplary embodiment of the present disclosure.

### Detailed description of the embodiments

The present disclosure is described below with reference to the drawings and the embodiments in detail. It is to be noted that the embodiments of the present application and the characteristics in the embodiments may be combined with each other under the condition of no conflicts.

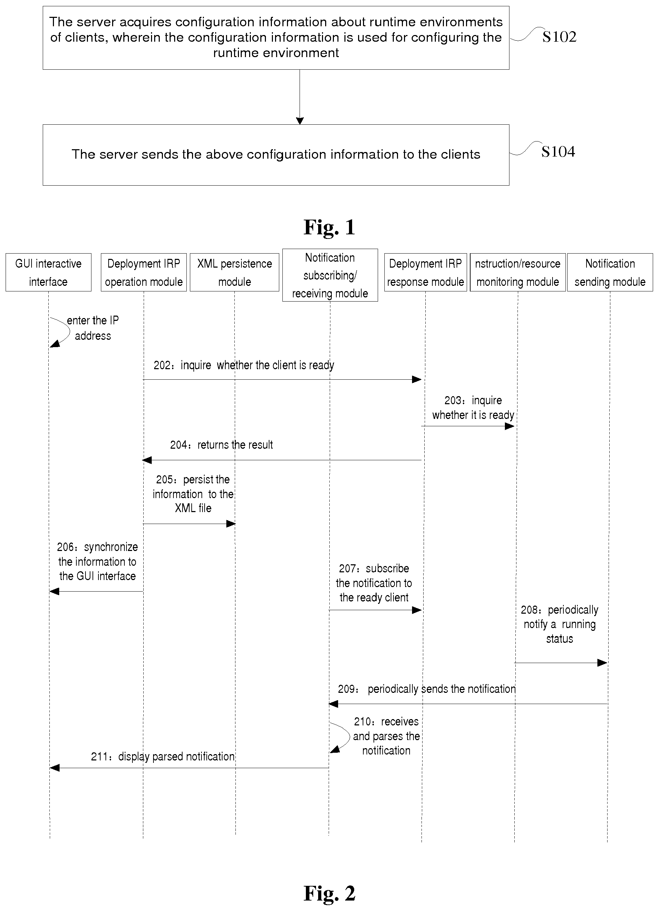

Fig. 1 is a flowchart of a method for configuring runtime environment according to an embodiment of the present disclosure. As shown in Fig. 1, the method includes the following steps S102 to S104.

Step S102: the server acquires configuration information about runtime environments of clients, wherein the configuration information is used for configuring the runtime environment.

Step S104: the server sends the above configuration information to the clients.

In the above steps, by virtue of the technical means that the server sends configuration information to the client, the server can achieve the unified configuration of the client runtime environment, avoiding the manual configuration of the client one by one, saving the configuration time of the runtime environment, improving the configuration efficiency, and, because the server is automatically configured, the error caused because of human is avoided.

There are various ways of implementing Step S102, for example, it may be implemented with one of the following ways: (1) the server receiving a set of deployment instructions entered by a user, for each of the clients, the set of deployment instructions being used as the configuration information, wherein the set of deployment instructions and the client in an one-to-one relationship; and (2) the server acquires the above set of deployment instructions from a preset XML file. In this way, when the client receives the set of deployment instructions of the server, it can execute the instructions in the set of deployment instructions, and after the execution of these deployment instructions, it can realize the configuration of the runtime environment.

Prior to Step S104, the server also needs to acquire the IP address of the client to send the corresponding configuration information to the corresponding client according to the IP address. There are various ways in which the server acquires the IP address of the client, for example, acquires an IP address of the above client from the preset XML file, wherein the IP address is used to indicate a sending object (namely, the client) of the configuration information; and the server receives the above IP address entered by the user.

In fact, the above process of acquiring the IP address and configuration information can be used as an initialization process to configure the runtime environment, that is, before the configuration of the runtime environment, the above IP address and configuration information are acquired. In a preferred implementation process, it can be achieved in the following manner.

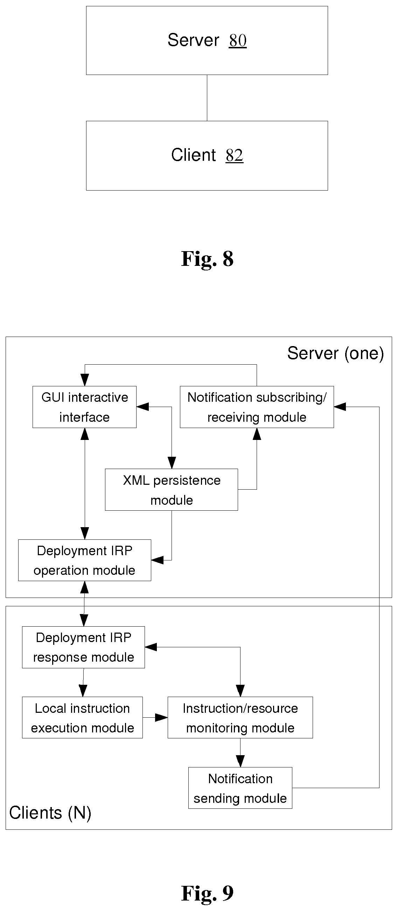

In the following, the initialization process of the present disclosure will be described in detail with reference to Fig. 2, and it needs to be initialized when the module on the server is used for the first time or the number of clients to be deployed and the IP address change. It should be noted that the flow shown in Fig. 2 may be implemented based on the system shown in Fig. 9, but is not limited thereto.

Fig. 2 is an initialization flow schematic diagram of a method for configuring runtime environment according to an exemplary embodiment of the present disclosure. As shown in Fig. 2, the method mainly includes but not limited to the following steps.
Step 201: The user enters the IP address of clients in the Graphical User Interface (GUI) interface.
Step 202: A request operation is initiated to clients to inquire whether clients are ready.
Step 203: The client is inquired about whether it is ready. The client receives a request sent from the server about whether it is ready, and inquires an instruction/resource monitoring module for acquiring information about the readiness.
Step 204: The client returns the result of the request of the server to notify the server that the client is ready.
Step 205: The information such as the IP address of the ready client persists to the XML file.
Step 206: The information that the client is ready is synchronized to the GUI interactive interface for display.
Step 207: The notification is subscribed to the ready client.
Step 208: The client will periodically notify a sending module of the information such as its own statistical resource occupation and running status.
Step 209: The client informs the sending module to periodically send the information such as resource occupation, running status, heartbeat and so on to the server, that is, to send the notification to the subscriber periodically.
Step 210: The server receives and parses the notification sent from the client.
Step 211: The parsed notification is displayed in the server GUI interface.

After Step S104, the server receives and displays the configuration progress and/or resource occupation information of the above client; and there is a plurality of triggering events that the server receives and displays the configuration progress and/or resource occupation information of the above client. For example, the server can send a request message to the above client, wherein the request message is used to request the above client to feed back the above configuration progress and/or the above resource occupation information.

There are many ways to send the above configuration information to clients: CORBA is a specification proposed by the Object Management Group (OMG) to solve the distributed processing environment. Its platform independence realizes the cross-platform reference of the object, and its language independence makes it easy to expand and reuse. As long as both parties follow the unified Corba standard, the interoperability of the software or software components of different manufacturers, different programming languages, different operating systems, and different platforms can be guaranteed. This technical feature is particularly applicable to the configuration deployment of a heterogeneous runtime environment.

Therefore, in the present embodiment, the server may send the above configuration information to the clients through the CORBA interface.

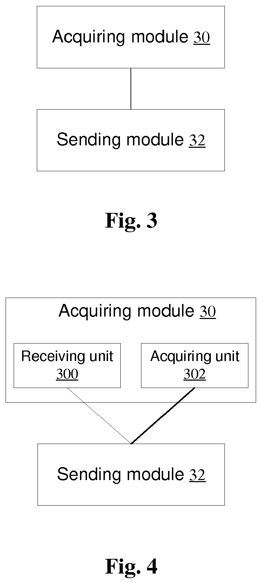

In the present embodiment, there is also provided a device for configuring runtime environment, applied to a server. As shown in Fig. 3, the device includes:
an acquiring module 30 configured to acquire configuration information about runtime environments of clients, wherein the configuration information is used for configuring the above runtime environment; and
a sending module 32 connected to the acquiring module 30 and configured to send the above configuration information to the above clients.

Through the function achieved by the above modules, the configuration efficiency of the runtime environment may be improved.

In an exemplary embodiment, as shown in Fig. 4, the acquiring module 30 includes one of: a receiving unit 300 connected to the sending module 32 and configured to receive a set of deployment instructions entered by a user, the above set of deployment instructions being used as the configuration information, wherein the set of deployment instructions and the client in an one-to-one relationship; and an acquiring unit 302 connected to the sending module 32 and configured to acquire the set of deployment instructions from a preset XML file.

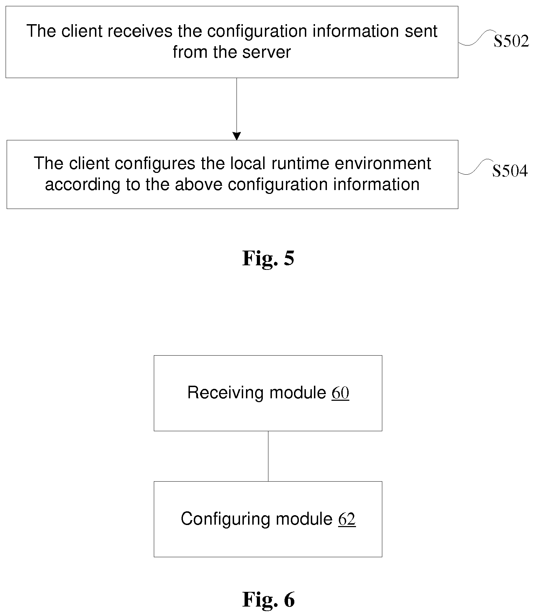

In the present embodiment, the client side is also improved. As shown in Fig. 5, the method includes the following steps.

Step S502: The client receives the configuration information sent from the server.

Step S504: The client configures the local runtime environment according to the above configuration information.

In Step S504, the client can receive the above configuration information through the CORBA interface, but is not limited to the sending mode.

Based on the method shown in Fig. 5, the present embodiment also provides a device for configuring runtime environment for implementing the above method. The device is applied to the client. As shown in Fig. 6, the device includes:
a receiving module 60 configured to receive configuration information sent from a server; and
a configuring module 62 connected to the receiving module 60 and configured to configure the local runtime environment according to the above configuration information.

In order to better understand the embodiments shown in Figs. 1 to 6, the present disclosure now details the configuration flow of the above runtime environment in conjunction with the preferred embodiments. The core of the following preferred embodiments is to propose a deployment interface in line with CORBA specification, and realize the interface in a runtime environment. The design idea is that the interface description language (IDL) file is written to define the deployment interface. The deployment interface specifies the operation commands used to implement the deployment, as well as the command parameters, return values and other content, and then achieves these interfaces on the runtime environment. The main implementation principle is to load and maintain a mapping table of the IP address of each runtime environment and the corresponding deployment transaction sequence in a server, so that after the server parses the IDL file and issues the operation coomand to implement the corresponding transaction to the specified client, clients can complete the automated configuration of the runtime environment of clients by locally implementing the corresponding deployment transaction sequence in response to the operation command. The following embodiments deliver the configuration deployment of all the runtime environments to the server for centralized management. All the runtime environments can be deployed and configured at the same time. There is no need to deploy the runtime environment one by one, improving the operation efficiency and usability, and solving the shortcomings of traditional methods well.

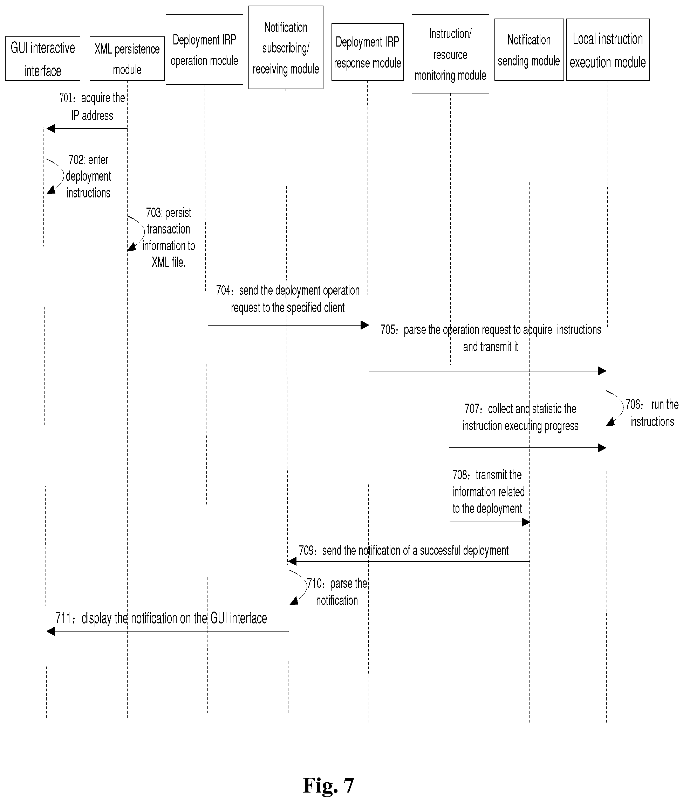

As shown in Fig. 7, the runtime environment configuration flow provided by the present embodiment includes:
Step 701: The IP address of the client is parsed from the XML file.
Step 702: The set of deployment instructions for clients (runtime environment) is configured in the GUI interface.
Step 703: The IP address of clients and the corresponding set of deployment instructions persist to the local XML file of the server.
Step 704: The set of deployment instructions for clients is packaged to the deployment operation command, and the server sends the deployment operation request to the client.
Step 705: The client receives the deployment operation request and parses the deployment operation command to acquire the set of local instructions used to deploy the client.
Step 706: The instructions in the instruction set are run to complete the client deployment operation.
Step 707: The execution log is collected from the local instruction executing module to count the deployment progress.
Step 708: The client's own resource (CPU, a hard disk, a network card, etc.) occupation information is monitored and is transmitted to the notification sending module together with the deployment progress information.
Step 709: The notification sending module of the client periodically packages the information related to the deployment as the notification to send to the server (where the notification that all local deployment instructions of the client are executed successfully is sent after all the instructions are executed).
Step 710: The server receives and parses the notification related to the deployment.
Step 711: The notification related to the deployment is displayed on the server-side GUI interface after the notification related to the deployment is parsed.

In an exemplary embodiment of the present disclosure, there is also provided a system for configuring runtime environment. As shown in Fig. 8, the system includes a server and a client.

The server 80 is configured to acquire configuration information about runtime environments of clients; and send the above configuration information to the above clients, wherein the configuration information is used for configuring the above runtime environment. In an exemplary implementation process, the server is configured to present the GUI interface and configured to enter and save the need to enable which clients (runtime environments) execute the set of which deployment transactions, send the packaged deployment commands one by one to the client, inquire the client about the ready information and the information of the executing process, and display them in the GUI interface.

The client 82 is connected to the server 80 and configured to receive the above configuration information sent from the server; and configure the local runtime environment according to the above configuration information. In an exemplary embodiment, the client is configured to receive a deployment operation command sent from the server, parse the set of deployment transactions in the deployment operation command, i.e., the locally operable instruction set, run on the client, and send the execution process information of the instructions to be run of the client to the server in the form of a notification.

A further exemplary embodiment of the present disclosure also provides a system for configuring runtime environment. As shown in Fig. 9, the system includes a server and a client, wherein the server includes a GUI interface, an XML persistence module, a deployment IRP operation module, and a notification subscribing/receiving module; there are N clients (the natural number), including a deployment IRP response module, a local instruction execution module, an instruction/resource monitoring module, and a notification sending module. Each module will be described in detail below.

The server includes a GUI interactive interface, an XML persistence module, a deployment IRP operation module, a notification subscribing/receiving module. Herein:
the GUI interactive interface is configured to input the IP address of the client and its set of transactions to be deployed, maintain a mapping table of the IP address of the client and its corresponding ready state and the set of deployment transactions, and display the notification related to the auto-configuration deployment sent from clients.

The XML persistence module is configured to persist the mapping table of the IP address of the client and its corresponding ready state and the set of deployment transactions to the server to facilitate the searching of other modules.

The deployment IRP operation module is configured to acquire the Integrated Reference Point (IRP) reference of clients through the IP address of clients, search for the XML file generated by the XML persistence module, acquire the set of deployment instructions for each client, and package the set of deployment instructions, issue the operation command packaging the set of deployment instructions of the client to clients using the acquired IRP reference, and require the client to execute and return the execution result (the synchronization command needs to return the result, and the asynchronous command may not return the result).

The notification subscribing/receiving module is configured to notify and subscribe to clients to facilitate the acquisition of the current deployment progress, resource occupation, heartbeat and other information of clients, parse the notification sent from clients and finally present it to the GUI interactive interface.

The client includes a deployment IRP response module, a local instruction execution module, an instruction/resource monitoring module, and a notification sending module, herein
the deployment IRP response module is configured to enable the IRP naming service so that the server can acquire the IRP reference of the client with the IP address, respond to the operation command sent from the server and receive its command parameter to parse the set of deployment instructions of the client to be executed by the local instruction execution module.

The local instruction execution module is configured to execute the set of deployment instructions parsed by the IRP response module on the client, complete the configuration deployment of the client runtime environment, and provide the execution result of instructions and the error information to the instruction/resource monitoring module.

The instruction/resource monitoring module is configured to collect the execution result of each deployment instruction of the local instruction execution module in the configuration deployment process and calculate the deployment execution progress according to the set of instructions to be executed provided by the deployment IRP response module; monitor the resource occupation of the client, and send the collected command execution progress and resource monitoring information to the notification sending module.

The notification sending module is configured to periodically send a notification to a subscriber (server), and the notification packages the following information: the heartbeat information, the command execution progress information, and the resource occupation information for determining the link state.

In another embodiment, there is also provided software for performing the technical solutions described in the above embodiments and preferred embodiments.

In another embodiment, there is also provided a storage medium in which the above software is stored, including but not limited to optical disks, floppy disks, hard disks, erasable and writable memories, and the like.

Obviously, those skilled in the art should know that each module or step of the embodiment of the present disclosure may be implemented by a universal computing device, and the modules or steps may be concentrated on a single computing device or distributed on a network formed by a plurality of computing devices, and may optionally be implemented by programmable codes executable for the computing devices, so that the modules or steps may be stored in a storage device for execution with the computing devices, and, in some cases, the steps shown or described may be performed in an order different from the order herein, or the modules or steps may form each integrated circuit module, or multiple modules or steps therein may form a single integrated circuit module for implementation. As a consequence, the present disclosure is not limited to any specific hardware and software combination.

The above is only the preferred embodiment of the present disclosure and not intended to limit the present disclosure, and for the technician of the field, the present disclosure may have various modifications and variations. Any modifications, equivalent replacements, improvements and the like within the spirit and principle of the present disclosure shall fall within the scope of protection as defined in the present disclosure.

### Industrial Applicability

According to the embodiment of the present disclosure, the technical problems existing in the related art that configuration efficiency of a runtime environment is relatively low, etc. are solved with the technical means that the server sends the configuration information of the runtime environment for configuring the client to the client, so as to achieve the case where the server configures a runtime environment of the client, thereby improving the configuration efficiency of the runtime environment.

## Claims

1. A method for configuring runtime environment, comprising:
acquiring, by a server, configuration information about runtime environments of clients, wherein the configuration information is used for configuring the runtime environment; and
sending, by the server, the configuration information to the clients.

2. The method according to claim 1, wherein the server acquires configuration information about runtime environments of clients, comprising one of:
for each of the clients, receiving, by the server, a set of deployment instructions entered by a user, and the set of deployment instructions being used as the configuration information, wherein the set of deployment instructions and the client in an one-to-one relationship; and
acquiring, by the server, the set of deployment instructions from a preset Extensible Markup Language (XML) file.

3. The method according to claim 1, wherein before the server sends the configuration information to the clients, the method comprises one of:
acquiring, by the server, an IP address of the client from the preset XML file, wherein the IP address is used to indicate a sending object of the configuration information; and
receiving, by the server, the IP address entered by the user.

4. The method according to claim 1, wherein after the server sends the configuration information to the clients, the method further comprises:
receiving and displaying, by the server, a configuration progress and/or resource occupation information of the client.

5. The method according to claim 4, wherein before the server receives and displays the configuration progress and/or resource occupation information of the client, the method comprises:
sending, by the server, a request message to the client, wherein the request message is used to request the client to feed back the configuration progress and/or the resource occupation information.

6. The method according to claim 1, wherein the server sends the configuration information to the clients, comprising:
sending, by the server, the configuration information to the clients through a Common Object Request Broker Architecture (CORBA) interface.

7. A method for configuring runtime environment, comprising:
receiving, by a client, configuration information sent from a server; and
configuring, by the client, the local runtime environment according to the configuration information.

8. The method according to claim 7, wherein the client receives the configuration information sent from the server, comprising:
receiving, by the client, the configuration information through a Common Object Request Broker Architecture (CORBA) interface.

9. A device for configuring runtime environment, applied to a server, the device comprising:
an acquiring module configured to acquire configuration information about runtime environments of clients, wherein the configuration information is used for configuring the runtime environment; and
a sending module configured to send the configuration information to the clients.

10. The device according to claim 9, wherein the acquiring module comprises one of:
a receiving unit configured to receive a set of deployment instructions entered by a user, the set of deployment instructions being used as the configuration information, wherein the set of deployment instructions and the client in an one-to-one relationship; and
an acquiring unit configured to acquire the set of deployment instructions from a preset Extensible Markup Language (XML) file.

11. A device for configuring runtime environment, applied to a client, the device comprising:
a receiving module configured to receive configuration information sent from a server; and
a configuring module configured to configure the local runtime environment according to the configuration information.

12. A system for configuring runtime environment, comprising:
a server, configured to acquire configuration information about runtime environments of clients; and send the configuration information to the clients, wherein the configuration information is used for configuring the runtime environment; and
a client, configured to receive the configuration information sent from a server; and configure the local runtime environment according to the configuration information.
